# EUROPÄISCHE PATENTSCHRIFT

(11) **EP 1 105 451 B1**
(45) Veröffentlichungstag und Bekanntmachung des Hinweises auf die Patenterteilung: **17.07.2002**
(21) Anmeldenummer: 99940169.8
(22) Anmeldetag: 07.08.1999
(51) Int. Cl.: C11D 3/37

(54) **HERSTELLUNG VON ENTSCHÄUMERGRANULATEN IM FLIESSBETTVERFAHREN**
PRODUCTION OF DEFOAMING GRANULATES ACCORDING TO A FLUIDIZED BED METHOD
PRODUCTION DE GRANULES D'AGENT ANTIMOUSSANT SELON LA TECHNIQUE DU LIT FLUIDISE

(30) Priorität: 17.08.1998 DE 19837195
(43) Veröffentlichungstag der Anmeldung: 13.06.2001
(73) Patentinhaber: Cognis Deutschland GmbH & Co. KG, 40589 Düsseldorf (DE)
(72) Erfinder: SCHMID, Karl, Heinz, D-40822 Mettmann (DE); STANISLOWSKI, Detlef, D-40822 Mettmann (DE); KOREN, Karin, D-40227 Düsseldorf (DE); NEUSS, Michael, D-50997 Köln (DE)
(86) Internationale Anmeldenummer: EP9905722
(87) Internationale Veröffentlichungsnummer: WO0011127

(56) Entgegenhaltungen:
- EP-A- 0 094 250
- EP-A- 0 718 018
- EP-A- 0 771 864
- WO-A-91/12306
- WO-A-98/08929

## Beschreibung

Die vorliegende Erfindung betrifft ein Verfahren zur Herstellung von Silikon enthaltenden Entschäumergranulaten für feste Waschmittel, wobei die Silikone in Form von wäßrigen Emulsionen aufgesprüht werden auf ein zugemischtes Vorprodukt aus Trägermaterialien und ggf. weiteren Entschäumern unter gleichzeitiger Granulation und Trocknung in einer Wirbelschicht nach dem Fließbett-Verfahren. Des weiteren betrifft die vorliegende Erfindung die Verwendung derartiger Entschäumergranulate in festen Waschmitteln.

Waschmittel für die Haushaltswäsche und die industrielle Wäsche enthalten im allgemeinen organische Tenside, Builder sowie zahlreiche organische und anorganische Additive. Die für die Wäsche eingesetzten Tenside neigen gewöhnlich während des Waschzyklus zur Schaumentwicklung, was sich negativ auf das Waschergebnis auswirkt. Daher besteht ein praktisches Bedürfnis, die Schaumentwicklung während des Waschvorgangs zu kontrollieren. Als besonders geeignete Entschäumer haben sich dabei Silikone erwiesen, die in der Regel auf Trägermaterialien aufgebracht und ggf. mit weiteren organischen entschäumend wirkenden Substanzen gecoatet in festen Waschmitteln eingesetzt werden.

So ist aus der **DE-A1-31 28 631** die Herstellung von schaumgedämpften Waschmitteln mit einem Gehalt an Silikonentschäumem, die mikroverkapselt sind, bekannt. Dabei wird das Silikon in einer wäßrigen Dispersion eines filmbildenden Polymeren dispergiert und die Dispersion - getrennt von den übrigen in Wasser gelösten bzw. dispergierten Waschmittelbestandteilen - über eine besondere Leitung der Sprühtrocknungsanlage zugeführt. Die Vereinigung der beiden Teilströme erfolgt im Bereich der Sprühdüse. Als filmbildende Polymere kommen zum Beispiel Celluloseether, Stärkeether oder synthetische wasserlösliche Polymere in Frage. Die Bildung von Mikrokapseln erfolgt spontan in der Sprühdüse. Das beschriebene Verfahren ist zwangsläufig an die Herstellung sprühgetrockneter Waschmittel gebunden. Eine Übertragung auf anderweitig, zum Beispiel durch Granulierung hergestellte Waschmittel scheint bei dieser Arbeitsweise nicht möglich.

Aus der europäischen Patentanmeldung **EP-A1- 0 496 510** sind Silikon enthaltende Entschäumer bekannt, wobei auf Stärke als Trägermaterial eine Mischung aus Silikonen und Fettalkoholen, Fettsäuren oder Glycerinmonoester mit speziellen Schmelzpunkten aufgebracht wird. Zur Herstellung dieser Entschäumergranulate werden die Silikone und die weiteren organischen Bestandteile in flüssiger Form mit der Stärke gemischt oder im Fließbettverfahren granuliert. Problematisch nach diesem Verfahren erweist sich das Einsprühen der Silikone und der organischen Materialien auf den Träger bei der Granulation. So zeigen die Silikone aufgrund ihrer Viskosität und ihrer klebrigen, öligen Konsistenz zum einen Probleme bei der Pumpbarkeit und zum anderen Fadenzüge und Verklebungen in der Sprühdüse, wodurch das gewünschte feinverteilte Versprühen kaum möglich ist.

Aufgabe der vorliegenden Erfindung war es, ein Verfahren zur Herstellung von gut wirkenden Entschäumergranulaten für feste Waschmittel zur Verfügung zu stellen. Des weiteren sollten durch das Verfahren Entschäumergranulate zugänglich sein, die gut rieselfähig und nicht-staubend sind. Schließlich sollte das Verfahren so ausgerichtet sein, daß die Silikone ohne Probleme feinverteilt aufgesprüht werden können.

Ein Gegenstand der vorliegenden Erfindung betrifft ein Verfahren zur Herstellung von Entschäumergranulaten für feste Waschmittel bestehend aus Trägermaterialien, Silikonen und ggf. in Wasser unlöslichen wachsartigen Entschäumersubstanzen, wobei man Silikone in Form wäßriger Emulsionen aufsprüht auf ein zugemischtes Vorprodukt aus Trägermaterialien und ggf. in Wasser unlöslichen wachsartigen Entschäumersubstanzen unter gleichzeitigem Trocknen und Granulieren in einer Wirbelschicht oberhalb einer mit Durchtrittsöffnungen für die Trocknungsluft versehenen rechteckigen Anströmfläche.

### Silikone

Im Sinne der vorliegenden Erfindung sind geeignete Silikone übliche Organopolysiloxane, die einen Gehalt an feinteiliger Kieselsäure, die wiederum auch silaniert sein kann, aufweisen. Derartige Organopolysiloxane sind beispielsweise in der schon zitierten Europäischen Patentanmeldung **EP-A1-0 496 510** beschrieben. Besonders bevorzugt sind Polydiorganosiloxane, die aus dem Stand der Technik bekannt sind. Geeignete Polydiorganosiloxane weisen eine nahezu lineare Kette auf und sind gemäß folgender Formel (I) gekennzeichnet, 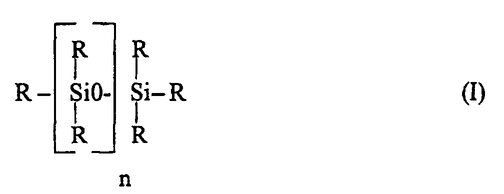 wobei R unabhängig voneinander für einen Alkyl- oder einen Arylrest und n für Zahlen im Bereich von 40 bis 1500 stehen kann. Beispiele für geeignete Substituenten R sind Methyl, Ethyl, Propyl, Isobutyl, tert. Butyl und Phenyl.

In der Regel enthalten die Polydiorganosiloxane feinteilige Kieselsäure, die auch silaniert sein kann. Insbesondere geeignet sind im Sinne der vorliegenden Erfindung kieselsäurehaltige Dimethylpolysiloxane.

Vorteilhafterweise haben die Polydiorganosiloxane eine Viskosität nach Brookfield bei 25 °C im Bereich von 5000 mPas bis 30 000 mPas, insbesondere von 15 000 bis 25 000 mPas.

Ein erfindungswesentliches Kriterium der vorliegenden Erfindung ist, daß die Silikone in Form ihrer wäßrigen Emulsionen eingesprüht werden. In der Regel gibt man das Silikon zu vorgelegtem Wasser unter Rühren. Falls gewünscht kann man zur Erhöhung der Viskosität der wäßrigen Silikon-Emulsionen sogenannte Verdickungsmittel, wie sie aus dem Stand der Technik bekannt sind, zugeben. Die Verdickungsmittel können anorganischer und/oder organischer Natur sein, besonders bevorzugt werden nichtionische Celluloseether wie Methylcellulose, Ethylcellulose und Mischether wie Methylhydoxyethylcellulose, Methylhydroxypropylcellulose, Methylhydroxybutylcellulose sowie anionische Carboxycellulose-Typen wie das Carboxymethylcellulose-Natriumsalz (Abkürzung CMC). Insbsonders geeignete Verdicker sind Mischungen von CMC zu nichtionischen Celluloseethern im Gewichtsverhältnis 80 : 20 bis 40 : 60, insbesondere 75 : 25 bis 60 : 40.

In der Regel und besonders bei Zugabe der beschriebenen Verdickermischungen empfehlen sich Einsatzkonzentrationen von cirka 0,5 bis 10, insbesondere von 2,0 bis 6 Gew.-% - berechnet als Verdickermischung und bezogen auf wäßrige Silikonemulsion.

Der Gehalt an Silikonen der beschriebenen Art in den wäßrigen Emulsionen liegt vorteilhafterweise im Bereich von 5 bis 50 Gew.-%, insbesondere von 20 bis 40 Gew.-% - berechnet als Silikone und bezogen auf wäßrige Silikonemulsion.

Nach einer weiteren vorteilhaften Ausgestaltung erhalten die wäßrigen Silikon-Lösungen als Verdicker Stärke, die aus natürlichen Quellen zugänglich ist, beispielsweise aus Reis, Kartoffeln, Mais und Weizen. Die Stärke ist vorteilhafterweise in Mengen von 0,1 bis zu 50 Gew.-% - bezogen auf Silikon-Emulsion - enthalten und insbesondere in Mischung mit den schon beschriebenen Verdickermischungen aus Natrium-Carboxymethylcellulose und einem nichtionischen Celluloseether in den schon genannten Mengen.

Zur Herstellung der wäßrigen Silikon-Emulsionen geht man zweckmäßigerweise so vor, daß man die ggf. vorhandenen Verdickungsmittel in Wasser vorquellen läßt, bevor die Zugabe der Silikone erfolgt. Das Einarbeiten der Silikone erfolgt zweckmäßigerweise mit Hilfe wirksamer Rühr- und Mischungsvorrichtungen.

### Trägermaterialien

Als Trägermaterial können im Sinne der Erfindung alle bekannten anorganischen und/oder organischen Trägermaterialien eingesetzt werden. Beispiele für typische anorganische Trägermaterialien Alkalicarbonate, Alumosilikate, wasserlösliche Schichtsilikate, Alkalisilikate, Alkalisulfate, beispielsweise Natriumsulfat und Alkaliphosphate. Bei den Alkalisilikaten handelt es sich vorzugsweise um eine Verbindung mit einem Molverhältnis Alkalioxid zu SiO₂ von 1:1,5 bis 1:3,5. Die Verwendung derartiger Silikate resultiert in besonders guten Korneigenschaften, insbesondere hoher Abriebsstabilität und dennoch hoher Auflösungsgeschwindigkeit in Wasser. Zu den als Trägermaterial bezeichneten Alumosilikaten gehören insbesondere die Zeolithe, beispielsweise Zeolith NaA und NaX. Zu den als wasserlöslichen Schichtsilikaten bezeichneten Verbindungen gehören beispielsweise amorphes oder kristallines Wasserglas.

Als organische Trägermaterialien kommen zum Beispiel filmbildende Polymere, beispielsweise Polyvinylalkohole, Polyvinylpyrrolidone, Poly(meth)acrylate, Polycarboxylate, Cellulosederivate und Stärke in Frage. Brauchbare Celluloseether sind insbesondere Alkalicarboxymethylcellulose, Methylcellulose, Ethylcellulose, Hydroxyethylcellulose und sogenannte Cellulosemischether, wie zum Beispiel Methylhydroxyethylcellulose und Methylhydroxypropylcellulose, sowie deren Mischungen. Besonders geeignete Mischungen sind aus Natrium-Carboxymethylcellulose und Methylcellulose zusammengesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Derartige Celluloseethergemische können in fester Form oder als wäßrige Lösungen verwendet werden, die in üblicher Weise vorgequollen sein können. Im Sinne der Erfindung werden als Träger besonders bevorzugt die native Stärke, die aus Amylose und Amylopectin aufgebaut ist. Als native Stärke wird Stärke bezeichnet, wie sie als Extrakt aus natürlichen Quellen zugänglich ist, beispielsweise aus Reis, Kartoffeln, Mais und Weizen. Native Stärke ist ein handelsübliches Produkt und damit leicht zugänglich.

Als Trägermaterialien können einzelne oder mehrere der vorstehend genannten Verbindungen eingesetzt werden, insbesondere ausgewählt aus der Gruppe der Alkalicarbonate, Alkalisulfate, Alkaliphosphate, Zeolithe, wasserlösliche Schichtsilikate, Alkalisilikate, Polycarboxylate, Carboxymethylcellulose, Polyacrylat/Polymethacrylat und Stärke. Besonders geeignet sind Mischungen von Alkalicarbonaten, insbesondere Natriumcarbonat, Alkalisilikaten, insbesondere Natriumsilikat, Alkalisulfaten, insbesondere Natriumsulfat, Zeolithen, Polycarboxylate, insbesondere Poly(meth)acrylat, und Celluloseether und nativer Stärke. Die Trägermaterialien können folgendermaßen zusammengesetzt sein:
0 bis 2 Gew.-% Celluloseether
0 bis 75 Gew.-% native Stärke
0 bis 30 Gew.-% Alkalisilikat
0 bis 75 Gew.-% Alkalisulfat
0 bis 95 Gew.-% Alkalicarbonat
0 bis 95 Gew.-% Zeolithe
0 bis 5 Gew.-% Polycarboxylate, wobei sich die Summe zu 100 Gew.-% addieren muß.

### Wachsartige Entschäumer

Im Sinne der vorliegenden Erfindung können zusätzlich neben den Silikonen wachsartige , in Wasser unlösliche Entschäumerverbindungen eingesetzt werden. Als "wachsartig" werden solche Verbindungen verstanden, die einen Schmelzpunkt bei Atmospärendruck über 25 °C (Raumtemperatur), vorzugsweise über 50 °C und insbesondere über 70 °C aufweisen. Die ggf. erfindungsgemäß enthaltenen wachsartigen Entschäumersubstanzen sind in Wasser praktisch nicht löslich, d.h. bei 20 °C weisen sie in 100 g Wasser eine Löslichkeit unter 0,1 Gew.-% auf.

Prinzipiell können alle aus dem Stand der Technik bekannten wachsartigen Entschäumersubstanzen zusätzlich enthalten sein. Geeignete wachsartige Verbindungen sind beispielsweise Bisamide, Fettalkohole, Fettsäuren, Carbonsäureester von ein- und mehrwertigen Alkoholen sowie Paraffinwachse oder Mischungen derselben. Geeignet sind Bisamide, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin, 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoylethylendiamin, Bis-palmitoylethylendiamin, Bisstearoylethylendiamin und deren Gemische sowie die entsprechenden Derivate des Hexamethylendiamins.

Geeignete Carbonsäureester leiten sich von Carbonsäuren mit 12 bis 28 Kohlenstoffatomen ab. Insbesondere handelt es sich um Ester von Behensäure, Stearinsäure, Ölsäure, Palmitinsäure, Myristinsäure und/oder Laurinsäure.

Der Alkoholteil des Carbonsäureesters enthält einen ein- oder mehrwertigen Alkohole mit 1 bis 28 Kohlenstoffatomen in der Kohlenwasserstoffkette. Beispiele von geeigneten Alkoholen sind Behenylalkohol, Arachidylalkohol, Kokosalkohol, 12-Hydroxystearylalkohol, Oleylalkohol und Laurylalkohol sowie Ethylenglykol, Glycerin, Methanol, Ethanol, Isopropanol, Vinylalkohol, Saccharose, Erythrit, Pentaerythrit, Sorbitan und/oder Sorbit. Bevorzugte Ester sind solche von Methanol, Ethylenglykol, Glycerin und Sorbitan, wobei der Säureteil des Esters insbesondere aus Behensäure, Stearinsäure, Ölsäure, Palmitinsäure oder Myristinsäure ausgewählt wird.

In Frage kommende Ester mehrwertiger Alkohole sind beispielsweise Xylitmonopalmitat, Pentarythritmonostearat, Glycerinmonostearat, Ethylenglykolmonostearat und Sorbitanmonostearat, Sorbitanpalmitat, Sorbitanmonolaurat, Sorbitandilaurat, Sorbitandistearat, Sorbitandibehenat, Sorbitandioleat sowie gemischte Talgalkylsorbitanmono- und -diester. Brauchbare Glycerinester sind die Mono-, Di- oder Triester von Glycerin und genannten Carbonsäuren, wobei die Mono- oder Dieester bevorzugt sind. Glycerinmonostearat, Glycerinmonooleat, Glycerinmonopalmitat, Glycerinmonobehenat und Glycerindistearat sind Beispiele hierfür.

Beispiele für geeignete natürliche Ester sind Bienenwachs, das hauptsächlich aus den Estern CH₃(CH₂)₂₄COO(CH₂)₂₇CH₃ und CH₃(CH₂)₂₆COO(CH₂)₂₅CH₃ besteht, und Carnaubawachs, das ein Gemisch von Camaubasäurealkylestem, oft in Kombination mit geringen Anteilen freier Carnaubasäure, weiteren langkettigen Säuren, hochmolekularen Alkoholen und Kohlenwasserstoffen, ist.

Geeignete Carbonsäuren als weitere Entschäumerverbindung sind insbesondere Behensäure, Stearinsäure, Ölsäure, Palmitinsäure, Myristinsäure und Laurinsäure sowie deren Gemische, wie sie aus natürlichen Fetten bzw. gegebenenfalls gehärteten Ölen, wie Talg oder hydriertem Palmöl, erhältlich sind. Bevorzugt sind gesättigte Fettsäuren mit 12 bis 22, insbesondere 14 bis 18 C-Atomen.

Geeignete Fettalkohole als weitere Entschäumerverbindung sind die hydrierten Produkte der beschriebenen Fettsäuren.

Das im Sinne der Erfindung bevorzugte Paraffinwachs als weitere Entschäumerverbindung stellt im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in **"The Analyst" 87 (1962), 420,** beschrieben, und/oder seinen Erstarrungspunkt. Darunter versteht man die Temperatur, bei der das Paraffin durch langsames Abkühlen aus dem flüssigen in den festen Zustand übergeht. Dabei sind bei Raumtemperatur vollständig flüssige Paraffine, das heißt solche mit einem Erstarrungspunkt unter 25 °C, erfindungsgemäß nicht brauchbar. Eingesetzt werden können beispielsweise die aus **EP 309 931** bekannten Paraffinwachsgemische aus beispielsweise 26 Gew.-% bis 49 Gew.-% mikrokristallinem Paraffinwachs mit einem Erstarrungspunkt von 62 °C bis 90 °C, 20 Gew.-% bis 49 Gew.-% Hartparaffin mit einem Erstarrungspunkt von 42 °C bis 56 °C und 2 Gew.-% bis 25 Gew.-% Weichparaffin mit einem Erstarrungspunkt von 35 °C bis 40 °C. Vorzugsweise werden Paraffine bzw. Paraffingemische verwendet, die im Bereich von 30 °C bis 90 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß brauchbaren Paraffinwachsen liegt dieser Flüssiganteil so niedrig wie möglich und fehlt vorzugsweise ganz. So weisen besonders bevorzugte Paraffinwachsgemische bei 30 °C einen Flüssiganteil von unter 10 Gew.-%, insbesondere von 2 Gew.-% bis 5 Gew.-%, bei 40 °C einen Flüssiganteil von unter 30 Gew.-%, vorzugsweise von 5 Gew.-% bis 25 Gew.-% und insbesondere von 5 Gew.-% bis 15 Gew.-%, bei 60 °C einen Flüssiganteil von 30 Gew.-% bis 60 Gew.-%, insbesondere von 40 Gew.-% bis 55 Gew.-%, bei 80 °C einen Flüssiganteil von 80 Gew.-% bis 100 Gew.-%, und bei 90 °C einen Flüssiganteil von 100 Gew.-% auf. Die Temperatur, bei der ein Flüssiganteil von 100 Gew.-% des Paraffinwachses erreicht wird, liegt bei besonders bevorzugten Paraffinwachsgemischen noch unter 85 °C, insbesondere bei 75 °C bis 82 °C.

Im Sinne der Erfindung werden insbesondere die Paraffinwachse der geschilderten Art eingesetzt.

### Verfahren

Im Sinne der vorliegenden Erfindung wird zunächst ein Vorprodukt aus den Trägermaterialien und den ggf. enthaltenen wachsartigen Entschäumersubstanzen hergestellt. Sofern das Vorprodukt zusätzlich wachsartige Entschäumersubstanzen enthält, beträgt der Gewichtsanteil an Trägermaterialien vorzugsweise 20 bis 98 Gew.-%, insbesondere 35 bis 95 Gew.-%, und der der wachsartigen Entschäumersubstanzen vorzugsweise 2 bis 80 Gew.-%, insbesondere 5 bis 65 Gew.-% - berechnet auf Vorprodukt.

Das Trägermaterial kann in üblicher Weise durch Sprühtrocknen einer wäßrigen Aufschlämmung erzeugt werden. Sofern zusätzlich wachsartige Entschäumersubstanzen eingesetzt werden, können diese beispielsweise durch Aufbringen der geschmolzenen wachsartigen Entschäumersubstanzen auf das sprühgetrocknete, körnige Trägermaterial, beispielsweise durch sukzessives Zumischen, insbesondere in Form eines Sprays aufgebracht werden. Das Trägermaterial, wird dabei vorzugsweise durch Mischorgane oder durch Fluidisierung in Bewegung gehalten, um eine gleichmäßige Beladung des Trägermaterials zu gewährleisten. Die dafür verwendeten Sprühmischer können kontinuierlich oder diskontinuierlich betrieben werden.

Die Herstellung von zusätzlich wachsartigen Entschäumersubstanzen enthaltenden Vorprodukten erfolgt in einer weiteren erfindungsgemäßen bevorzugten Ausgestaltung derart, daß man das Trägermaterial in Wasser löst beziehungsweise aufschlämmt, die wachsartigen Entschäumersubstanzen darin dispergiert und diesen Slurry anschließend sprühtrocknet. Der Dispersion kann ein wasserlöslicher, nichttensidischer Dispersionsstabilisator in Form eines in Wasser quellfähigen Polymeren zugesetzt werden. Beispiele hierfür sind die genannten Celluloseether, Homo- und Copolymere von ungesättigten Carbonsäuren, wie Acrylsäure, Maleinsäure und copolymerisierbaren Vinylverbindungen, wie Vinylether, Acrylamid und Ethylen. Der Zusatz an derartigen als Dispersionsstabilisatoren wirkenden Verbindungen in der wäßrigen Aufschlämmung beträgt vorzugsweise nicht über 5 Gew.-%, insbesondere 1 Gew.-% bis 3 Gew.-%, bezogen auf das entstehende Vorprodukt. Der Wassergehalt des Slurries kann je nach Art beziehungsweise Löslichkeit der Trägermaterialien 30 Gew.-% bis 60 Gew.-% betragen. Das Sprühtrocknen der Dispersion kann in im Prinzip bekannter Weise in dafür vorgesehenen Anlagen, sogenannten Sprühtürmen, mittels heißer, in Gleichstrom oder Gegenstrom geführter Trocknungsgase erfolgen. Dabei ist die Trocknung durch im Gleichstrom mit dem Sprühgut geführte Trocknungsgase bevorzugt, da so insbesondere bei paraffinhaltigen Vorprodukten der auf die potentielle Heißluftflüchtigkeit einiger Bestandteile des Paraffins zurückzuführende Aktivitätsverlust auf ein Minimum gesenkt werden kann.

Das Aufsprühen der wäßrigen Silikon-Emulsionen auf das Vorprodukt erfolgt im Rahmen der vorliegenden Erfindung vorzugsweise kontinuierlich auf das feste Vorprodukt unter gleichzeitigem Trocknen und Granulieren in einer Wirbelschicht oberhalb einer mit Durchtrittsöffnungen für die Trocknungsluft versehenen rechteckigen Anströmfläche nach dem sogenannten Fließbett-Verfahren. Dabei werden die wäßrigen Silikon-Emulsionen über eine oder mehrere Düsen in die Wirbelschicht eingebracht. Im Sinne des erfindungsgemäßen Verfahrens werden gleichzeitig mit den wäßrigen Silikon-Emulsionen, aber separat von diesen das Vorprodukt aus Trägermaterial und wachsartigen Entschäumersubstanzen zugemischt, vorzugsweise über eine automatisch geregelte Feststoffdosierung. Die Produktströme an wäßrigen Silikon-Emulsion und zugemischtem Vorprodukt werden dabei so gesteuert, daß sich Entschäumergranulate ergeben, die vorzugsweise 2,0 bis 25 Gew.-%, insbesondere 5,0 bis 20 Gew.-% Silikon - berechnet als Silikon und bezogen auf Entschäumergranulat - enthalten. Der zu 100 Gew.-% fehlende Rest des Entschäumergranulats ist das schon beschriebene Vorprodukt. In der Wirbelschicht trifft die wäßrige Silikon-Emulsion auf die zugemischten Vorprodukte unter gleichzeitigem Verdampfen des Wassers, wodurch angetrocknete bis getrocknete Keime entstehen, die mit weiteren eingebrachten wäßrigen Silikon-Emulsionen bzw. mit den zugemischten Vorprodukten umhüllt, granuliert und wiederum gleichzeitig getrocknet werden. Das gleichzeitige Trocknen und Granulieren erfolgt in der Wirbelschicht oberhalb einer mit Durchtrittsöffnungen für die Trocknungsluft versehenen rechteckigen Anströmfläche, wobei das zu trocknende Produkt während dieser Trocknungsphase vorzugsweise kontinuierlich pneumatisch weiterbefördert wird. Geeignete Apparate für das Fließbettverfahren werden beispielsweise im Markt von den Firmen Sulzer, Heinen, Gea oder Babcock angeboten. Die Dimensionen des Anströmbodens sind nicht kritisch. Bevorzugte Anströmböden sind etwa 1 m breit und 3 m lang. Die einströmende Lufttemperatur liegt dabei vorzugsweise zwischen 80 °C und 400 °C. Die einströmende Luftmenge liegt vorzugsweise im Bereich von 10 000 bis 100 000 m3/h, insbesondere etwa 15 000 bis 50 000 m³/h.

Die Aufenthaltszeit für das zu trocknende Produkt, welches kontinuierlich weiterbefördert wird, liegt vorzugsweise im Bereich von 1 bis 30 Minuten, insbesondere im Bereich von 1 bis 15 Minuten.

Im Sinne der vorliegenden Erfindung werden die Entschäumergranulate als getrocknet betrachtet, sofern der Gehalt an freiem Wasser unter 10 Gew.-%, vorzugsweise von 0,1 bis 2 Gew.-%, jeweils bezogen auf die fertigen Granulate, beträgt.

Die nach dem erfindungsgemäßen Verfahren hergestellten Entschäumergranulate sind, leicht fließende Produkte , die nicht stauben. Sie zeigen eine gute entschäumende Wirkung und sind sowohl in sprühgetrockneten als auch in granulierten Waschmitteln einsetzbar.

Ein weiterer Gegenstand der vorliegenden Erfindung betrifft die Verwendung der erfindungsgemäß hergestellten Entschäumergranulate zur Herstellung von festen Waschmitteln.

Die Entschäumergranulate können in Mengen von 0,2 bis 7,0 Gew.-%, bevorzugt in Mengen von 0,5 bis 4,0 Gew.-% - bezogen auf Waschmittel - enthalten sein. Des weiteren können die Waschmittel übliche anionische, nichtionische oder kationische Tenside, sowie weitere übliche Bestandteile in üblichen Mengen enthalten. Als übliche Bestandteile können die Waschmittel Enthärter wie Tripolyphosphat oder Zeolith, sowie ggf. Bleichmittel wie Perborat oder Percarbonat in üblichen Mengen enthalten. Die Entschäumergranulate können auf einfache Weise untergemischt werden.

### Beispiele

### I. Herstellung eines wachsartigen Entschäumersubstanz enthaltenden Vorprodukts

### Beispiel 1

25.000 kg eines wäßrigen Slurry bestehend aus 0,5 Gew.-% Celluloseether, 3,0 Gew.-% Natriumsilikat, 18,0 Gew.-% Natriumsulfat, 19,0 Gew.-% Natriumcarbonat, 2,0 % Polyacryl/methacrylat, 52,5 Gew.-% Wasser und 5,0 % Gew. eines Paraffinwachsgemisches bestehend aus 45 Gew. % Paraffin mit einem Erstarrungspunkt von 62 °C bis 90 °C, 25 Gew.-% Hartparaffin mit einem Erstarrungspunkt von 42 °C bis 56 °C und 20 Gew-% Weichparaffin mit einem Erstarrungspunkt von 35 °C bis 40 °C wurde unter ständigem Homogenisieren unter einem Druck von 40 bar in einem Sprühturm zerstäubt und mittels heißer, im Gegenstrom geführter Verbrennungsgase (Temperatur im Ringkanal 250 °C, im Turmaustritt 105°C) getrocknet.

### Beispiel 2

25.000 kg eines wäßrigen Slurry bestehend aus 0,5 Gew.-% Celluloseether, 2,5 Gew.-% Natriumsilikat, 12,0 Gew.-% Natriumsulfat, 25,0 Gew.-% Zeolith, 2,0 Gew.-% Polyacryl/methacrylat, 52,5 Gew.-% Wasser, 4,5 Gew.-% Paraffin mit einem Erstarrungspunkt von 62 °C bis 90 °C und 1,0 Gew. % Bis-stearylethylendiamid wurde unter ständigem Homogenisieren unter einem Druck von 40 bar in einem Sprühturm zerstäubt und mittels heißer, im Gegenstrom geführter Verbrennungsgase (Temperatur im Ringkanal 250 °C, im Turmaustritt 102 °C) getrocknet.

### II. Herstellung der wäßrigen Silikon-Emulsion

### Beispiel 3

5.000 kg einer wäßrigen Lösung, enthaltend 4,0 Gew.-% einer Verdickermischung aus Natrium-Carboxymethylcellulose und Methylcellulose im Gewichtsverhältnis 70 : 30 wurden 4 Stunden bei 25 °C quellen gelassen. Zu dieser Lösung wurden 22 Gew.-% eines Polysiloxan-Entschäumers (Polydimethylsiloxan mit mikrofeiner silanierter Kieselsäure) zugesetzt. Man erhielt eine stabile wäßrige Emulsion.

### Beispiel 4

5.000 kg einer wäßrigen Lösung, enthaltend 3,5 Gew.-% einer Verdickermischung aus Natrium-Carboxymethylcellulose und Methylcellulose im Gewichtsverhältnis 70 : 30) wurden 4 Stunden bei 25 C quellen gelassen. Zu dieser Lösung wurden 10 Gew.-% Maisstärke und 20 Gew.-% eines Polysiloxan-Entschäumers (Polydimethylsiloxan mit mikrofeiner silanierter Kieselsäure) zugesetzt. Man erhielt eine stabile wäßrige Emulsion.

### III. Granulatherstellung im Fließbett

### Beispiel 5

Über ein Fließbett (Wirbelschicht mit rechteckigem Luft-Anströmboden) mit einem Luftdurchsatz von 30.000 m³ Luft/h mit einer Temperatur von 160 °C wurden per Stunde kontinuierlich 1.000 kg des nach Beispiel 1 hergestellten pulverförmigen Vorprodukts geleitet und auf dieses Pulver kontinuierlich 250 kg/h der nach Beispiel 3 hergestellten Silikon-Emulsion aufgedüst.

Man erhielt ein Granulat mit folgender Zusammensetzung: 10,2 Gew.-% Silikon, 2,8 Gew.-% Celluloseether, 5,6 Gew.-% Natriumsilikat, 33,3 Gew.-% Natriumsulfat, 35,1 Gew.-% Natriumcarbonat, 3,7 Gew.-% Polyacryl/methacrylat und 9,3 Gew.-% eines Paraffinwachsgemisches bestehend aus 50 % Paraffin mit einem Erstarrungspunkt von 62 °C bis 90 °C, 25 Gew.-% Hartparaffin mit einem Erstarrungspunkt von 42 °C bis 56 °C und 25 Gew% Weichparaffin mit einem Erstarrungspunkt von 35 °C bis 40 °C mit einem Schüttgewicht von 760 g/l und einer Kornverteilung von 0,1 bis 1,6 mm. Das Produkt zeigte eine gute Rieselfähigkeit und hatte < 1 % Staubanteile.

### Beispiel 6

Entsprechend Beispiel 5 wurden über ein Fließbett (Wirbelschicht mit rechteckigem Luft-Anströmboden mit einem Luftdurchsatz von 30.000 m³ Luft/h mit einer Temperatur von 160°C) per Stunde kontinuierlich 1.000 kg des nach Beispiel 2 hergestellten pulverförmigen Vorprodukts geleitet und auf dieses Pulver kontinuierlich 250 kg/h der nach Beispiel 4 hergestellten Silikon-Emulsion aufgedüst.

Man erhielt ein Granulat mit folgender Zusammensetzung: 9,0 Gew.-% Silikon, 4,5 Gew.-% Stärke, 2,5 Gew.-% Celluloseether, 4,5 Gew.-% Natriumsilikat, 21,4 Gew.-% Natriumsulfat, 44,6 Gew.-% Zeolith, 3,6 Gew.-% Polyacryl/methacrylat, 8,1 Gew.-% Paraffin und 1,8 Gew.-% Bis-stearylethylendiamid mit einem Schüttgewicht von 720 g/l und einer Kornverteilung von 0,1 bis 1,6 mm. Das Produkt zeigte eine gute Rieselfähigkeit und hatte < 1 % Staubanteile.

### IV. Anwendungstechnische Versuche

Die hergestellten Entschäumergranulate wurden in einer Menge von 1,5 Gew.-% durch einfaches Vermischen in eine pulverförmige Universalwaschmittelrezeptur mit 8 Gew.-% Natrium-Alkylbenzolsulfonat, 10 Gew.-% Alkylethoxylat, 1,5 Gew.-% Seife, 10 Gew.-% Natriumcarbonat, 20 Gew.-% Zeolith, 3 Gew.-% Natriumsilikat, 20 Gew.-% Natriumperborat, 2 Gew.-% Tetraacetylethylendiamin (TAED), 0,5 Gew.-% Protease, Rest auf 100 Gew.-% Natriumsulfat und Wasser eingearbeitet. Die erhaltenen Waschmittel wiesen einwandfreies Schaumverhalten sowohl bei 30 °C als auch bei 40 °C, 60 °C und 95 °C auf.

## Patentansprüche

1. Verfahren zur Herstellung von Entschäumergranulaten für feste Waschmittel bestehend aus Trägermaterialien, Silikonen und ggf. in Wasser unlöslichen wachsartigen Entschäumersubstanzen, wobei man Silikone in Form wäßriger Emulsionen aufsprüht auf ein zugemischtes Vorprodukt aus Trägermaterialien und ggf. in Wasser unlöslichen wachsartigen Entschäumersubstanzen unter gleichzeitigem Trocknen und Granulieren in einer Wirbelschicht oberhalb einer mit Durchtrittsöffnungen für die Trocknungsluft versehenen rechteckigen Anströmfläche.

2. Verfahren nach Anspruch 1, **dadurch gekennzeichnet, daß** man während der Trocknungsphase das zu trocknende Produkt kontinuierlich pneumatisch weiterbefördert.

3. Verfahren nach Anspruch 1 oder 2, **dadurch gekennzeichnet, daß** man Polydisiloxane in Form ihrer wäßrigen Emulsionen aufsprüht.

4. Verfahren nach einem der Ansprüche 1 bis 3, **dadurch gekennzeichnet, daß** man die Silikone in Form wäßriger Emulsionen aufsprüht, die ein anorganisches oder organisches Verdickungsmittel, vorzugsweise eine Mischung von Natrium-Carboxymethylcellulose und einem nichtionischen Celluloseether, insbesondere in Mengen von 0,5 bis 10 Gew.-% - bezogen auf wäßrige Silikon-Emulsion - enthalten.

5. Verfahren nach einem der Ansprüche 1 bis 4, **dadurch gekennzeichnet, daß** man die Silikone in Form wäßriger Emulsionen aufsprüht, die eine Mischung aus Natrium-Carboxymethylcellulose, einem nichtionischen Celluloseether in einem Gewichtsverhältnis von 80 : 20 bis 40 : 60 in Mengen von 0,5 bis 10 Gew.-% sowie 0,1 bis 50 Gew.-% Stärke, vorzugsweise native Stärke, - bezogen auf wäßrige Silikon-Emulsion - enthalten.

6. Verfahren nach einem der Ansprüche 1 bis 5, **dadurch gekennzeichnet, daß** man die Silikone in Form wäßriger Emulsionen in Mengen von 5,5 bis 20,0 Gew.-% - berechnet als Silikon und bezogen auf Entschäumergranulat - aufsprüht.

7. Verfahren nach einem der Ansprüche 1 bis 6, **dadurch gekennzeichnet, daß** man als Trägermaterial mindestens eine Verbindung ausgewählt aus der von Alkalicarbonate, Alkalisulfate, Alkaliphosphate, Zeolithe, Alkalisilikate, Cellulosether, Polycarboxylate und Stärke gebildeten Gruppe, einsetzt.

8. Verfahren nach einem der Ansprüche 1 bis 7, **dadurch gekennzeichnet, daß** man als wachsartige Entschäumersubstanzen mindestens eine Verbindung ausgewählt aus der von Bisamiden, Fettsäuren, Fettalkoholen, Carbonsäureester oder Paraffinwachse gebildeten Gruppe einsetzt.

9. Verfahren nach einem der Ansprüche 1 bis 8, **dadurch gekennzeichnet, daß** man ein Vorprodukt zumischt, bestehend aus 20 bis 98 Gew.-% Trägermaterialien und 2 bis 80 Gew.-% wachsartigen Entschäumersubstanzen.

10. Verwendung der nach Anspruch 1 hergestellten Entschäumergranulate zur Herstellung von festen Waschmitteln.

## Claims

1. A process for the production of defoamer granules for solid detergents consisting of support materials, silicones and optionally water-insoluble wax-like defoamers, **characterized in that** silicones are sprayed in the form of aqueous emulsions onto an added intermediate product of support materials and optionally water-insoluble wax-like defoamers with simultaneous drying and granulation in a fluidized bed above a rectangular diffusor plate provided with throughflow openings for the drying air.

2. A process as claimed in claim 1, **characterized in that** the product to be dried is continuously pneumatically transported during the drying phase.

3. A process as claimed in claim 1 or 2, **characterized in that** polydisiloxanes are sprayed on in the form of aqueous emulsions.

4. A process as claimed in any of claims 1 to 3, **characterized in that** the silicones are sprayed on in the form of aqueous emulsions containing an inorganic or organic thickener, preferably a mixture of sodium carboxymethyl cellulose and a nonionic cellulose ether, more particularly in quantities of 0.5 to 10% by weight, based on aqueous silicone emulsion.

5. A process as claimed in any of claims 1 to 4, **characterized in that** the silicones are sprayed on in the form of aqueous emulsions containing a mixture of sodium carboxymethyl cellulose and a nonionic cellulose ether in a ratio by weight of 80:20 to 40:60 in quantities of 0.5 to 10% by weight and 0.1 to 50% by weight of starch, preferably native starch, based on aqueous silicone emulsion.

6. A process as claimed in any of claims 1 to 5, **characterized in that** the silicones are sprayed on in the form of aqueous emulsions in quantities of 5.5 to 20.0% by weight, expressed as silicone and based on defoamer granules.

7. A process as claimed in any of claims 1 to 6, **characterized in that** at least one compound selected from the group consisting of alkali metal carbonates, alkali metal sulfates, alkali metal phosphates, zeolites, alkali metal silicates, cellulose ethers, polycarboxylates and starch is used as the support material.

8. A process as claimed in any of claims 1 to 7, **characterized in that** at least one compound selected from the group consisting of bisamides, fatty acids, fatty alcohols, carboxylic acid esters or paraffin waxes is used as the wax-like defoamer.

9. A process as claimed in any of claims 1 to 8, **characterized in that** an intermediate product consisting of 20 to 98% by weight of support materials and 2 to 80% by weight of wax-like defoamers is added.

10. The use of the defoamer granules produced by the process claimed in claim 1 for the production of solid detergents.

## Revendications

1. Procédé de préparation de granulés d'agents anti-mousse pour des produits de lavage solides consistant en des matériaux de support, des silicones, et le cas échéant des substances anti-mousse cireuses insolubles dans l'eau, dans lequel on pulvérise des silicones sous forme d'émulsions aqueuses sur un préproduit mélangé à base de matériaux de support et le cas échéant des substances d'agent anti-mousse cireux, insolubles dans l'eau, tout en séchant et en granulant simultanément dans une couche tourbillonnaire au-dessus d'une surface à flux turbulent, rectangulaire, équipée d'orifices de pénétration pour l'air de séchage.

2. Procédé selon la revendication 1,
**caractérisé en ce que**
pendant la phase de séchage on continue à transporter pneumatiquement en continu le produit à sécher.

3. Procédé selon la revendication 1 ou la revendication 2,
**caractérisé en ce qu'**
on pulvérise le polydisiloxane sous la forme de ses émulsions aqueuse

4. Procédé selon l'une quelconque des revendications 1 à 3,
**caractérisé en ce qu'**
on pulvérise les silicones sous forme de leurs émulsions aqueuses qui renferment un agent épaississant minéral ou organique, de préférence un mélange de carboxyméthylcellulose sodique et d'un éther de cellulose non ionique, en particulier en quantités de 0,5 à 10 % en poids, rapporté à l'émulsion de silicone aqueuse.

5. Procédé selon l'une quelconque des revendications 1 à 4,
**caractérisé en ce qu'**
on pulvérise les silicones sous forme de leurs émulsions aqueuses, qui renferment un mélange à base de carboxyméthylcellulose sodique, un éther de cellulose non ionique dans un rapport pondéral de 80 : 20 à 40 : 60, en quantité allant de 0,5 à 10 % en poids, ainsi que de 0,1 à 50 % en poids d'amidon, de préférence de l'amidon naturel, rapporté à l'émulsion aqueuse de silicone.

6. Procédé selon l'une quelconque des revendications 1 à 5,
**caractérisé en ce qu'**
on pulvérise les silicones sous forme d'émulsions aqueuses en quantités allant de 5,5 à 20,0 % en poids calculé en tant que silicone et rapporté au granulé d'agent anti-mousse.

7. Procédé selon l'une quelconque des revendications 1 à 6,
**caractérisé en ce qu'**
on met en oeuvre comme matériau de support un composé choisi dans le groupe formé par les carbonates de métal alcalin, les sulfates de métal alcalin, les phosphates de métal alcalin, les zéolithes, les silicates de métal alcalin, les éthers de cellulose, les polycarboxylates et les amidons.

8. Procédé selon l'une quelconque des revendications 1 à 7,
**caractérisé en ce qu'**
on met en oeuvre comme substances d'agent anti-mousse cireuses, au moins un composé choisi dans le groupe formé par des bisamides, des acides gras, des alcools gras, des esters d'acide carboxylique ou des cires de paraffine.

9. Procédé selon l'une quelconque des revendications 1 à 8,
**caractérisé en ce qu'**
on mélange de préproduit qui consiste en 20 à 98 % en poids de produits de support et de 2 à 80 % en poids de substances d'agent anti-mousse cireuses.

10. Utilisation des granulés d'agent anti-mousse produit selon la revendication 1, pour la préparation de produits de lavage solides.
